Europäisches Patentamt

European Patent Office

Office européen des brevets

(19)

(11) **EP 0 756 701 B1**

(12) **EUROPÄISCHE PATENTSCHRIFT**

(45) Veröffentlichungstag und Bekanntmachung des
Hinweises auf die Patenterteilung:
**11.12.2002 Patentblatt 2002/50**

(21) Anmeldenummer: **95930481.7**

(22) Anmeldetag: **17.08.1995**

(51) Int Cl.$^7$: **G01M 17/04**

(86) Internationale Anmeldenummer:
**PCT/EP95/03268**

(87) Internationale Veröffentlichungsnummer:
**WO 96/007883 (14.03.1996 Gazette 1996/12)**

(54) **VERFAHREN ZUR BESTIMMUNG DER EIGENSCHAFTEN DER IN EINEM KRAFTFAHRZEUG EINGEBAUTEN STOSSDÄMPFER**

PROCESS FOR DETERMINING THE CHARACTERISTICS OF A MOTOR VEHICLE'S BUILT-IN SHOCK ABSORBERS

PROCEDE POUR LA DETERMINATION DES CARACTERISTIQUES DES AMORTISSEURS MONTES SUR UN VEHICULE

(84) Benannte Vertragsstaaten:
**AT BE CH DE DK ES FR GB GR IE IT LI LU MC NL PT SE**
Benannte Erstreckungsstaaten:
**LT LV SI**

(30) Priorität: **06.09.1994 DE 4431794**

(43) Veröffentlichungstag der Anmeldung:
**05.02.1997 Patentblatt 1997/06**

(60) Teilanmeldung:
**01101694.6 / 1 098 187**

(73) Patentinhaber: **Snap-On Technologies, Inc.
Lincolnshire, IL 60069 (US)**

(72) Erfinder: **LANGLECHNER, Richard
D-84579 Unterneukirchen (DE)**

(74) Vertreter: **Nöth, Heinz, Dipl.-Phys. et al
Eisenführ, Speiser & Partner
Arnulfstrasse 25
80335 München (DE)**

(56) Entgegenhaltungen:
**EP-A- 0 226 981        EP-A- 0 611 960
WO-A-89/12811**

**Beschreibung**

Die Erfindung betrifft ein Verfahren zur Bestimmung der Eigenschaften der in einem Kraftfahrzeug eingebauten Stoßdämpfer, bei dem das Kraftfahrzeug auf eine Auffahrhalterung gebracht wird, die anschließend schnell entfernt wird, damit das Kraftfahrzeug auf eine Unterlage auffällt, deren Abstand von der Auffahrhalterung dem durch die Konstruktion des Kraftfahrzeuges vorgegebenen Restausfederungsweg entspricht, bei dem der Verlauf der beim Auftreffen auf die Unterlage wirkenden sogenannten Radaufstandskraft bestimmt wird.

Bei der Durchfuhrung des in der EP-Patentschrift 2 26.9 81 beschriebenen Verfahrens zur Überprüfung des Fahrwerkzustandes eines Kraftfahrzeuges ist man bereits in der Lage, aus den die Radkraft auf die Unterlage wiedergebenden Ergebnissen durch entsprechende Kurvenanalyse u.a. Aussagen uber die Dämpfungseigenschaften der Achsgelenke eines Kraftfahrzeuges, uber die Güte des Stoßdämpfers und über die Federhärte des Kraftfahrzeuges zu machen. Die Beurteilung des Schwingungsverhaltens aus den bei der Messung der Radaufstandskrafte auf die Unterlage erhaltenen Diagrammen liefert jedoch keine absoluten Werte der Kenndaten eines Kraftfahrzeuges zum Prüfzeitpunkt. Dabei können Einflüsse, die durch den Reifendruck, den Beladungszustand des Kraftfahrzeuges und auch durch den vorliegenden Reifentyp bedingt sind, nicht berücksichtigt werden.

Aus dem Dokument WO 89/12811 ist eine Vorrichtung zur Durchführung eines Verfahrens zur Bestimmung der Eigenschaften der in einem Kraftfahrzeug eingebauten Stoßdämpfer bekannt. Die Vorrichtung weist eine Auffahrhalterung für das Kraftfahrzeug auf, die entfernbar über einer Unterlage angeordnet ist. Der Abstand der Auffahrhalterung von der Unterlage entspricht dem Restausfederungsweg des Kraftfahrzeugs. Die bekannte Vorrichtung weist auch eine Meßeinrichtung zur Bestimmung des zeitlichen Verlaufes des nach dem Auffallen des Kraftfahrzeuges auf die Unterlage auf diese wirkenden sogenannten Radaufstandkraft auf. Ferner ist es ein Meßsystem vorgesehen, mit dem der zeitliche Verlauf des Schwinnungsverhaltens von Karosserie und Rad bestimmt wird.

Aufgabe der vorliegenden Erfindung ist nun ein Verfahren zu entwickeln, das ermöglicht, die Eigenschaften des im Kraftfahrzeug eingebauten Stoßdämpfers, ohne diesen ausbauen zu müssen, unabhängig von den Größen, wie Reifendruck, Reifentyp, Beladungszustand usw. zu bestimmen, d.h. mit anderen Worten,ein Verfahren anzugeben, bei dem alle die Kräfte, die bei der bekannten Meßmethode das Schwingungsverhalten des Kraftfahrzeuges, nachdem dieses auf.die Unterlage auftrifft, mitbestimmen, eliminiert werden können und bei dem die Ist-Werte der vorhandenen Dämpfungskonstanten und Federsteifigkeit oder mit anderen Worten, der derzeitige Zustand des Stoßdämpfers aus den Meßwerten berechnet werden kann.

Dies wird erfindungsgemäß dadurch erreicht, daß das Schwingungsverhalten von Karosserie und jeweils eines Rades gemessen wird und die hierbei erhaltenen Meßergebnisse zusammen mit den Meßwerten für die Radaufstandskraft in die für gedämpfte Schwingungen bekannten Differentialgleichungen eingesetzt und die für das Fahrwerk eines Kraftfahrzeugs charakteristischen Daten, nämlich die Karosserie- und Radmassen, die Federsteifigkeit und Dämpfungskonstanten berechnet werden.

Der durch das erfindungsgemäße Verfahren erreichbare Vorteil gegenüber den bisher bekannten Verfahren besteht darin, daß das erzielte Ergebnis unabhängig ist vom Reifendruck, vom Reifentyp und vom Beladungszustand des geprüften Kraftfahrzeuges und die tatsächlich vorhandenen Werte ergibt.

Durch die Bestimmung des gesamten Schwingungsverhaltens von Karosserie und jeweils eines Rades erhält man nicht nur einen Wert für die Dämpfung, sondern die Dämpfungscharakteristik des Stoßdämpfers unterteilt in Zug- und Druckbereich. Ein weiterer Vorteil des vorliegenden Verfahrens liegt darin, daß die gesamte Prüfdauer sehr kurz ist und beide Seiten einer Radachse nach Stoßanregung gleichzeitig geprüft werden können. Neben der Dämpferkennlinie sind auch die Federsteifigkeit der Fahrzeugfeder und die wirksamen Massen bestimmbar.

Die Möglichkeit der Gewinnung sämtlicher für die Beurteilung des Zustandes eines Kraftfahrzeuges erforderlichen Daten im Rahmen einer einzigen kurzzeitigen Messung macht das Verfahren geeignet für die Durchführung von Reihenuntersuchungen, beispielsweise beim TÜV, in der Automobilindustrie bei der Bandendkontrolle und der Fahrwerksanalyse, aber auch zur Diagnose der bereits in Gebrauch befindlichen Kraftfahrzeuge in der Werkstatt, da hierdurch ein Vergleich mit den Sollwerten des Kraftfahrzeugs ermöglicht wird.

Vorzugsweise läßt sich das Schwingungsverhalten von Karosserie und Rad der zu prüfenden Achse eines Kraftfahrzeuges mittels einer Wegmessung der entstehenden Hubschwingungen von Karosserie und Rad für jede Seite der geprüften Achse bestimmen, wobei die Wegmessung entweder durch einzelne Bestimmung der Schwingungsamplituden der Karosserie gegenüber der Unterlage und des Rades gegenüber der Unterlage oder durch Bestimmung der Amplitudendifferenz beider Schwingungen durchgeführt wird. Man kann aber auch den Schwingungsverlauf durch eine Geschwindigkeitsmessung der Bewegung von Karosserie und Rad oder durch eine Beschleunigungsmessung bei der Bewegung von Karosserie und Rad nach ihrem Auftreffen auf die Unterlagen den Vorzug geben.

Ein solches Meßsystem kann einen induktiven Geber, einen Geschwindigkeitsmesser, einen Beschleunigungsmesser oder einen Leser enthalten oder mit einem Bildaufnahmesystem ausgestattet sein.

Einzelheiten über den Verlauf der Messung, Aufbau der hierfür geeigneten Vorrichtungen und die Auswertung der Meßergebnisse ergeben sich aus der nachstehenden Beschreibung von Ausführungsbeispielen anhand der Zeichnung.

Hierin zeigen:

Fig. 1 eine schematische Darstellung eines Prüfstandes, bei dem mit einem Bildaufnahmesystem gearbeitet wird,

Fig. 2 die Darstellung eines Ersatzmodelles für die in einem bewegten Kraftfahrzeug wirkenden Kräfte,

Fig. 3 den Verlauf der Schwingungsfrequenz der Radaufstandskraft, wie sie mit dem in Fig.1 gezeigten Versuchsaufbau gewonnen wird,

Fig. 4 den Verlauf der bei einer Wegmessung des Schwingungsverhaltens von Karosserie und Rad experimentell erhaltenen Werte im Vergleich zu den berechneten Werten, mit einem Versuchsaufbau nach Fig.1

Fig. 5 eine Aufzeichnung der Kennlinien, die bei Wiederholungsversuchen erhalten werden, (Versuchsaufbau nach Fig. 1)

Fig. 6 eine Darstellung von Dämpfungskennlinien, die bei einem Kraftfahrzeug mit Stoßdämpfern unterschiedlicher Qualität erhalten wurden (Versuchsaufbau nach Fig. 1),

Fig.7a ein Target, welches am Rad des Kraftfahrzeugs angebracht wird ,

Fig.7b ein Target, welches an der Karosserie des Kraftfahrzeugs angebracht wird und

Fig.7c ein Target, das an der Karosserie angebracht wird und die Bewegung der Karosserie sowohl in vertikaler als auch in hozizontaler Richtung erkennen läßt.

Ein für die Durchführung eines neuen Meßverfahrens vorgesehener Prüfstand umfaßt eine Auffahrrampe 1 mit zwei etwa im Radabstand einer Radachse eines Kraftfahrzeuges angeordneten Falldeckeln 2a,b, auf die ein zu prüfendes Kraftfahrzeug über eine schräg verlaufende Auffahrt 3 mit den beiden Rädern 4 entweder seiner Vorder- oder seiner Hinterachse auffährt. Die Oberfläche der Falldeckel 2a, b befindet sich etwa 50 mm über einer Unterlage 5, die als Wägeeinheit 6, z.B. in Form eines Dehnmeßstreifens oder dergleichen ausgebildet ist. Der gewählte Abstand 7 zwischen Falldeckel 2a,b und der Unterlage 5 bestimmt sich aus dem durch die Konstruktion des Kraftfahrzeuges vorgegebenen Restausfederungsweg, d.h. dem Abstand zwischen Radachse und einem Pufferanschlag, um zu vermeiden, daß nach dem Wegklappen der Falldeckel 2a,b beim freien Fall der Radachse auf die Unterlage 5 die Achse der Räder bereits vor dem Auftreffen auf die Unterlage 5 an den Anschlagpuffern anschlägt und damit das Schwingungsergebnis verfälscht wird.

Die Wägeeinheit 6 dient dazu, den zeitlichen Verlauf der Krafteinwirkung auf die Unterlage 5 zu messen, die nach dem Auftreffen der Räder 4 auf die Unterlage 5 eine Folge des Schwingungsverhaltens des Kraftfahrzeuges ist.

Diese Krafteinwirkung wird in der Folge als sogenannte Radaufstandskraft bezeichnet. Sie bildet eine wesentliche Komponente für die weitere numerische Bestimmung der gesuchten Eigenschaften des Stoßdämpfers.

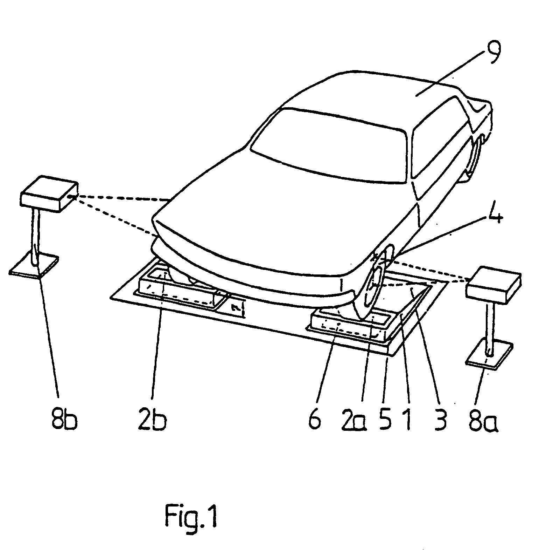

In einem seitlichen Abstand von den auf dem Prüfstand befindlichen Rädern 4 der Vorderachse des Kraftfahrzeuges befindet sich je ein Wegmeßsystem 8a und 8b. In der Darstellung nach Fig.1 ist das Wegmeßsystem 8a, b als ein Bildaufnahmesystem ausgebildet, das erlaubt, den Schwingungsverlauf von Karosserie 9 und Rad 4 berührungslos aufzuzeichnen. Der Verlauf der Schwingungsamplituden von Karosserie 9 und Rad 4 nach Durchfallen der Fallstrecke 7 bildet die zweite Komponente, die für die numerische Bestimmung der gesuchten Eigenschaften des Stoßdämpfers erforderlich ist. Hierzu werden sogenannte Targets an Rad und Karosserie angebracht und die Schwingungsvorgänge mit Hilfe eines Bildverarbeitungssystems erfaßt. Dabei besteht das Target für die Karosserie aus einem Balkenmuster und das Target für die Aufnahme der Radschwingungen aus einem rotationssymmetrischen Muster von Schwarz-Weiß-Übergängen.

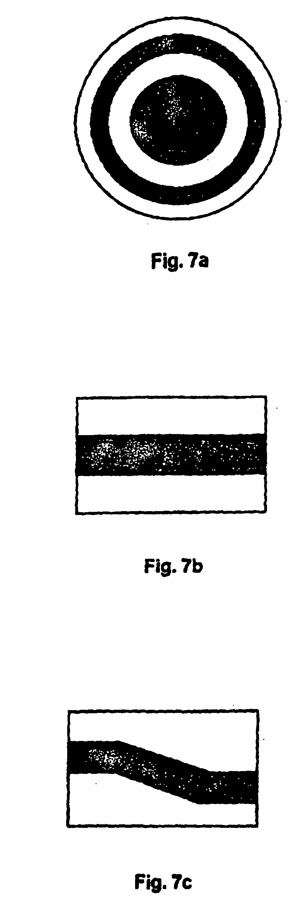

Beim Fall des Kraftfahrzeuges auf die Unterlage entstehen aber nicht nur Schwingungen der Karosserie in vertikaler Richtung, sondern beim Aufprall werden auch geringe Schwingungen der Karosserie in Fahrzeuglängsrichtung festgestellt. Da die hier angewandte Meßmethode extrem genaue Werte über das Schwingungsverhalten wiedergibt, sind auch diese horizontalen Schwingungsbewegungen nicht zu vernachlässigen. Um diese aber zu erfassen, hat es sich als sinnvoll erwiesen, das an sich bekannte Balkenmuster der Targets, weiches aus horizontalen schwarzen und weißen Balken besteht, abzuwandeln, derart, daß die Erkennung der Bewegung der Karosserie in Fahrtrichtung vor und zurück ermöglicht wird. Diese Abwandlung des Targets für reine vertikale Schwingungsbewegungen, in das hier für eine genauere Messung erforderliche Target ist aus Fig. 7c zu erkennen.

Fig. 7a zeigt das Target 11, welches am Rad angebracht wird und aus konzentrischen schwarzen und weißen Ringen besteht. Fig.7b ein Target 12, welches an der Karosserie angebracht wird, sofern man nur deren vertikale Schwingungen bestimmen will. Dieses Target 12 besteht aus horizontalen parallelen schwarzen und weißen Balken. In Fig. 7c ist ein Target gezeigt, das die Erkennung der Bewegung der Karosserie sowohl in vertikaler als auch in horizontaler Richtung, d.h. in Fahrtrichtung möglich macht. Die in Fig. 7b gezeigten parallelen schwarzen und weißen Balken zeigen nach Fig. 7c in einem Bereich einen gegen die Horizontale geneigten Verlauf.

Im folgenden soll auf die Auswertung der Testergebnisse eingegangen werden.

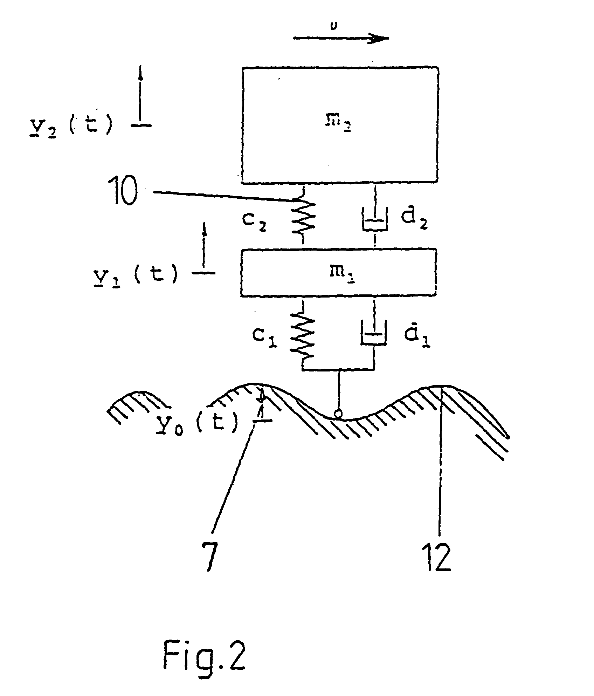

Zunächst ist festzustellen, daß der nachstehenden Rechenmethode ein vereinfachtes Modell eines Kraftfahrezuges zugrundegelegt wurde. Dieses ist in Fig. 2 dargestellt. Mit $m_1$ ist dabei die Masse von Rad 4 und Radachse, mit $m_2$ die Masse des Aufbaues, also der Karosserie 9, gegebenenfalls einschließlich einer im Prüffahrzeug vorliegenden Beladung bezeichnet. Der Koeffizient $c_1$ bezeichnet die Federkonstante, die durch die Reifenelastizität gegeben ist. Diese Elastizität erfährt eine durch $d_1$ gekennzeichnete Dämpfung.

Die Karosserie 9 ist über eine Feder 10 mit der Federkonstanten $c_2$ mit dem Rad 4 verbunden. Die Schwingung der Feder 10 wird durch einen Stoßdämpfer mit der Dämpfungskonstanten $d_2$ gedämpft.

Die in Fig.2 angedeutete Fahrbahn 12 weist Unebenheiten auf, die hier maximal dem Restausfederungsweg, also der Fallhöhe 7 im Prüfstand entsprechen.

Das dargestellte Modell entspricht einem Schwingungssystem, bei dem die Massen $m_2$ und $m_1$ über zwei hintereinandergeschaltete gedämpfte Federn miteinander verbunden sind. Die Bewegungsgleichungen eines solchen sogenannten Zweimassenschwingungssystems lauten wie folgt, wenn man Feder- und Dämpfungskräfte als lineare Funktionen der Relativauslenkung bzw. der Relativgeschwindigkeit annimmt.

$$1.\ m_2 \cdot \ddot{y}_2(t) + d_2[\dot{y}_2(t) - \dot{y}_1(t)] + c_2 \cdot [y_2(t) - y_1(t)] = 0$$

$$2.\ m_1 \cdot \ddot{y}_1(t) + d_2 \cdot [\dot{y}_1(t) - \dot{y}_2(t)] + c_2 \cdot [y_1(t) - y_2(t)] +$$

$$d_1 \cdot [\dot{y}_1(t) - \dot{y}_0(t)] + c_1 \cdot [y_1(t) - y_0(t)] = 0$$

Hierbei bedeuten $m_1$ = bewegte Massen von Rad, Radachse und Radaufhängung, $m_2$ = bewegter Anteil der Aufbaumasse des Kraftfahrzeuges, $c_1$ = Reifenelastizität, $c_2$ = Federsteifigkeit der Fahrzeugfeder, $d_1$ = Reifendämpfung, $d_2$ = Dämpfungskonstante des im Fahrzeug eingebauten Stoßdämpfers.

$Y_0(t)$ = zeitlicher Verlauf der Hubschwingung der Unterlage,

$\dot{y}_0(t)$ = zeitlicher Verlauf der Geschwindigkeit der Unterlage,

$y_1(t)$ = zeitlicher Verlauf der Hubschwingung des Rades,

$\dot{y}_1(t)$ = zeitlicher Verlauf der Radgeschwindigkeit,

$\ddot{y}_1(t)$ = zeitlicher Verlauf der Radbeschleunigung

$y_2(t)$ = zeitlicher Verlauf der Hubschwingungen der Karosserie,

$\dot{y}_2(t)$ = zeitlicher Verlauf der Geschwindigkeit der Karosserie,

$\ddot{y}_2(t)$ = zeitlicher Verlauf der Beschleunigung der Karosserie.

Beide Bewegungsgleichungen können in eine Differentialgleichung zusammengefaßt werden, indem man anstelle der Schwingungsamplituden von Rad und Karosserie deren Bewegungsdifferenz einführt. Man erhält dann

$$3.\ m_1 \cdot \ddot{x}(t) + d_2 \cdot A \cdot \dot{x}(t) + c_2 \cdot A \cdot \dot{x}(t) = f(t)$$

Hierbei bedeuten:

a)

$$x(t) = y_2(t) - y_1(t),$$

wobei $x(t)$, $y_2(t)$ und $y_1(t)$ Meßgrößen sind, nämlich der zeitliche Verlauf des Weges, der Karosserie und des Rades (Wegdifferenz wird errechnet!)

b)

$$A = 1 + \frac{m_1}{m_2}$$

sind Meßgrößen von Rad und Karosserie

c)

$$f(t) = -d_1 \cdot [\dot{y}_0(t) - \dot{y}_1(t)] - c_1 \cdot [y_0(t) - y_1(t)]$$

ist ebenfalls eine Meßgröße, nämlich der zeitliche Verlauf der Radaufstandskräfte (dynamische Radlast).

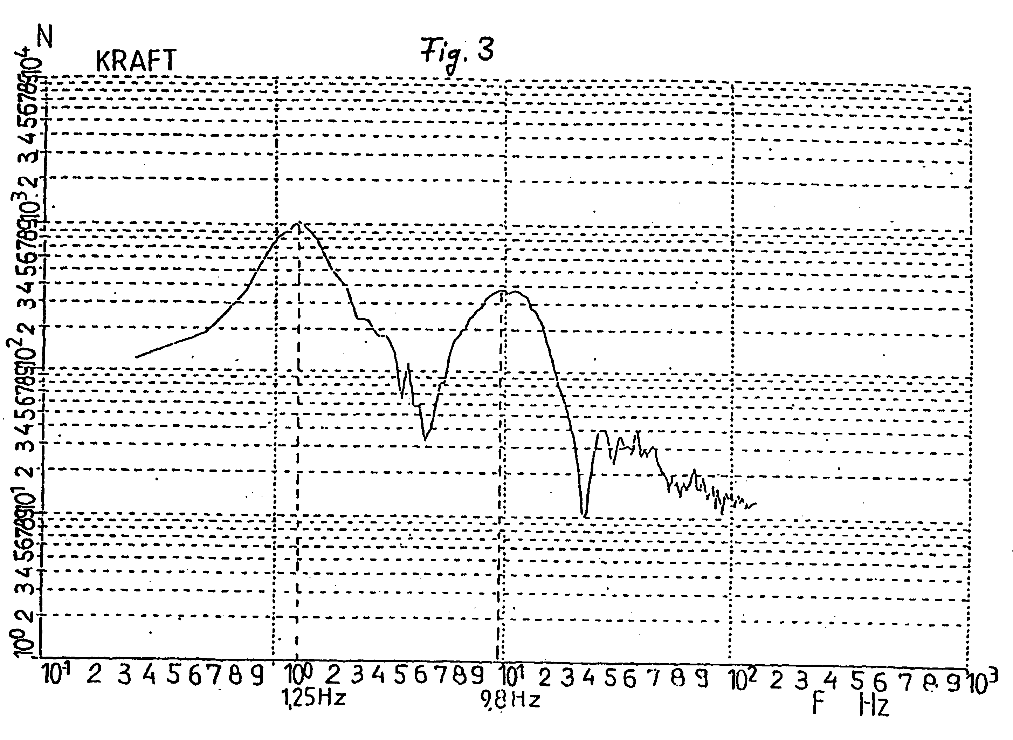

Das Fourierspektrum der Radaufstandskraft über der Frequenz ist zwar bekannt, doch ist es nochmals in Fig. 3 aufgezeichnet.

In dem Diagramm ist die Frequenz in logarithmische. Maßstab auf der Abszisse von $10^{-1}$ bis $10^3$ Hz aufgetragen, auf der Ordinate ist die Radaufstandskraft in f(t) von $10^0$ bis $10^4$ aufgetragen. Bei ca. 1,25 Hz erhält man ein erstes Maximum, das der Karosserieschwingung entspricht. Bei ca. 9,8 Hz erhält man das zweite Maximum, das der Radfrequenz entspricht.

Bevor man sich zu der vorstehend beschriebenen Methode zur Bestimmung der einzelnen Parameter entschloß, wurde überprüft, ob das der Methode zugrunde liegende idealisierte Modell überhaupt anwendbar ist, da z.B. auch die nicht geprüfte Radachse bei dem Auffall des Fahrzeugs auf die Unterlage zu Schwingungen angeregt wird.

Zunächst bestückte man daher die Testfahrzeuge mit insgesamt 8 Meßaufnehmern, die in Abständen voneinander an Karosserie- und Radachsen angebracht wurden.

Die Ergebnisse zeigten aber, daß kaum Drehbewegungen um die Fahrzeuglängsachse auftreten und daher wenig Schwingungsenergie auf die jeweils andere Fahrzeugseite übertragen wird. Auch ist der Einfluß der nicht geprüften Radachse auf die geprüfte Radachse gering. Es wird wenig Schwingungsenergie auf diese Achse übertragen.

Es erscheint somit möglich, linke und rechte Fahrzeugseite im Bereich der Prüfachse getrennt voneinander und ohne Berücksichtigung der nicht geprüften Radachse zu betrachten. Mit anderen Worten, das vorstehend beschriebene Ersatzmodell eines Zweimassenschwingers kann angewendet werden, ohne eine Verfälschung der Ergebnisse befürchten zu müssen.

Mit Hilfe des in Fig. 1 gezeigten Meßsystems können daher der zeitliche Verlauf der Radaufstandskräfte f(t) mittels der Wägeeinrichtung 6 und x(t) mittels des Wegmeßsystems 8a bzw. 8b gemessen werden. Eine entsprechende Programmierung eines Rechensystems (Computer), dem die große Anzahl der gemessenen Signale der Wägeeinrichtung 6 und des Wegemeßsystems 8a, 8b, eingespeist wurden, erlaubt es, die gesuchten Modellparameter m,d und c nach der Methode der kleinsten Fehlerquadrate zu berechnen.

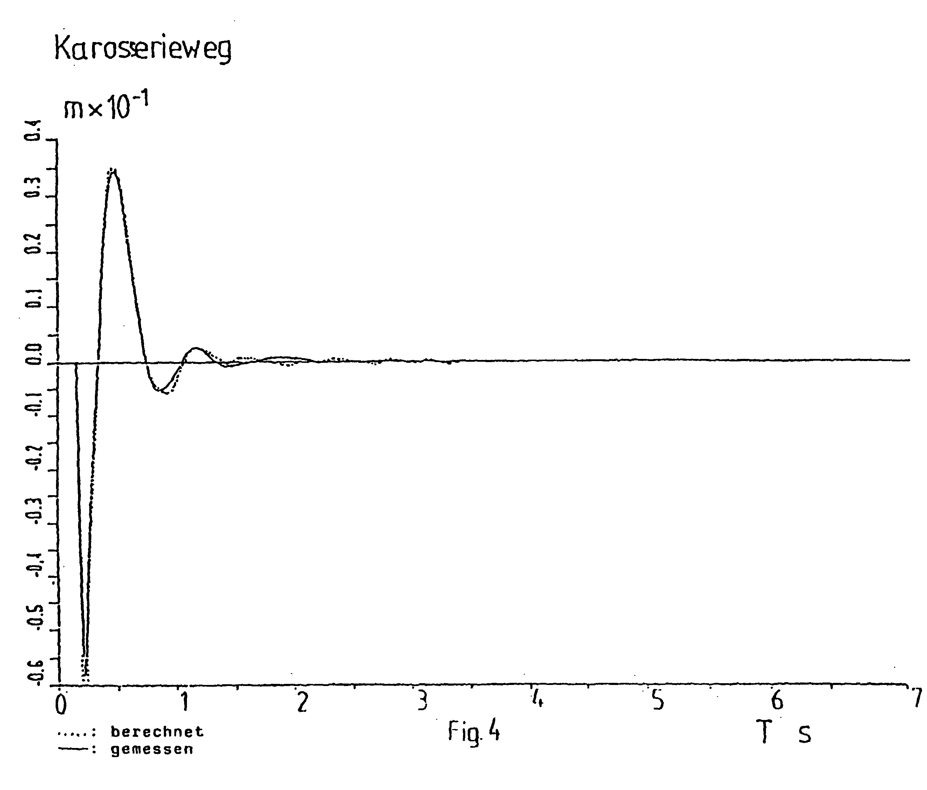

In Fig. 4 sind die berechneten und die gemessenen Werte mit Hilfe der induktiven Meßmethode für den Differenzweg über der Zeit in Sekunden aufgetragen. Die gute Übereinstimmung beider Kurvenzüge ist deutlich erkennbar.

Hieraus kann die Zweckmäßigkeit der gewählten Rechenmethode erkannt werden.

Nach Bestimmung der Modellparameter m, c und d lassen sich aber jetzt auch die wirksamen Größen der Radmasse $m_1$, der Karosseriemasse $m_2$, der Federsteifigkeit $c_2$ und der Dämpfungskonstanten $d_2$ berechnen, da der statische Anteil der Radaufstandskraft $f_{st}$ eine Beziehung dieser Größen zueinander liefert. Es gilt nämlich $f_{st} = (m_1 + m_2) \times g$, wobei g die Erdbeschleunigung = 9,8065 m/s$^2$ ist. Ferner gelten folgende Zusammenhänge der gewählten Modellparameter m,c und d zu $m_1$, $m_2$, $d_2$, und $c_2$:

$$m_1 = m$$

$$m_2 = f_{st}/g - m_1$$

$$d_2 = d \cdot m_2 \cdot g/f_{st}$$

$$c_2 = c \cdot m_2 \cdot g/f_{st}$$

Die vorstehenden Überlegungen ermöglichen es, eine symmetrische (Zug:Druck = 1:1) lineare Dämpfungslinie bezogen auf den Radaufstandspunkt eines im Kraftfahrzeug eingebauten Stoßdämpfers darzustellen. Im allgemeinen haben aber die zum Einsatz gelangenden Stoßdämpfer eine unsymmetrische Dämpfungskennlinie.

Hier führt entweder ein bereichsweise linearer Ansatz für die Dämpfungskraft oder ein quadratischer Ansatz mit unterschiedlich großen linearen und quadratischen Gliedern im Zug- und Druckbereich zum Ziel.

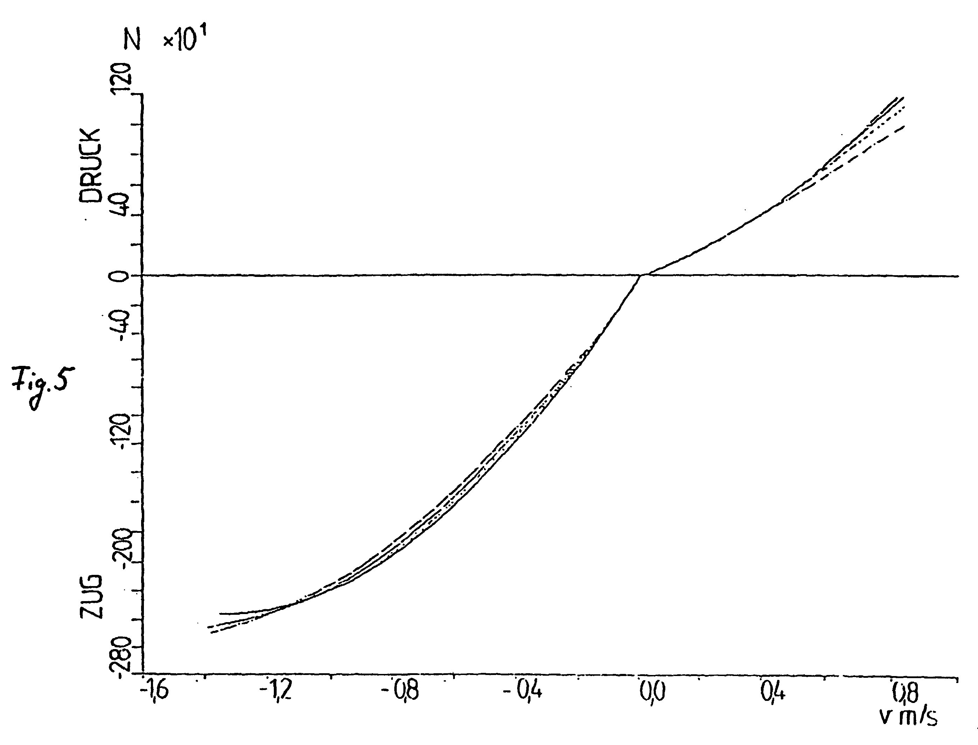

In Fig. 5 sind die Prüfergebnisse von fünf Versuchen mit einem Kraftfahrzeug der Marke Mercedes dargestellt. Wie aus dem Kurvenverlauf in Fig. 5 hervorgeht, zeigen sich kaum Unterschiede zwischen den Einzelergebnissen. Die berechneten Werte der Parameter zeigen von den gemessenen Werten Abweichungen zwischen 1 und 2 %.

Der Versuchsaufbau für diese letztgenannten Messungen entsprach der Fig. 1. Als Meßsystem wurde ein induktives Meßsystem eingesetzt.

Als Meßmethode wurde die Differenzwegbestimmung gewählt. Die Meßwerte des Wegemeßsystems und der Wägeeinheit wurden einem Computer eingespeist, dessen Software entsprechend den mathematischen Schwingungsgleichungen programmiert wurde.

Bei gleichem Versuchsaufbau können auch die einzelnen Amplituden von Karosserie und Rädern mittels des Wegmeßsystems bestimmt werden. Am Prinzip der Berechnungsmethode ändert sich hierdurch aber nichts.

Es ist aber auch möglich und in gewissen Fällen vorteilhaft, anstelle der Differenzwegbestimmung für die Berechnung der gewünschten Werte ein Meßsystem zu wählen, bei dem die Geschwindigkeitsdifferenzen von Karosserie und Radmassen bestimmt werden. Entsprechend kann auch eine Meßmethode gewählt werden, bei der die Beschleunigungsdifferenzen der genannten Meßgrößen bestimmt werden. Die hierfür geeigneten Geräte sind dem Fachmann bekannt und der Versuchsaufbau braucht daher für diese Meßmethoden nicht im einzelnen erläutert zu werden.

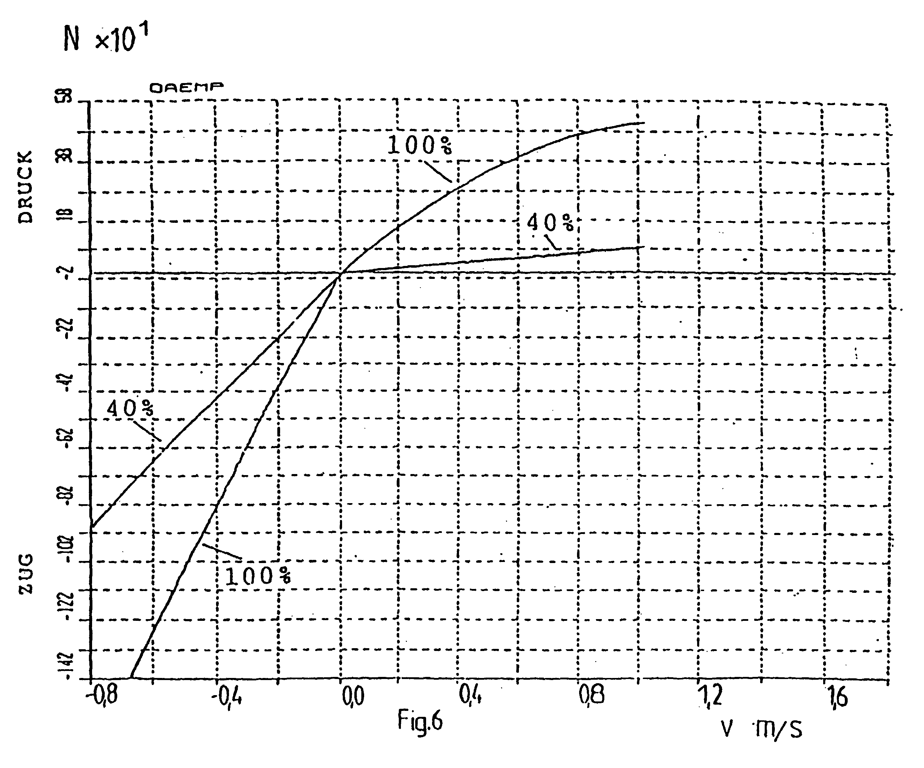

Zur Erläuterung der Leistungsfähigkeit des erfindungsgemäßen Verfahrens sei auf die Fig. 6 verwiesen.

In diesem Diagramm sind die Dämpfungskennlinien von unterschiedlichen Versuchsreihen dargestellt, die mit dem gleichen Testfahrzeug durchgeführt wurden. Zur Ermittlung dieser Kennlinien wurde zunächst das Testfahrzeug ohne Veränderung geprüft. Nachfolgend wurde hinten rechts der neue Stoßdämpfer gegen einen 40%igen ersetzt und das Fahrzeug nochmals geprüft.

Eine genauere Betrachtung der Dämpfungskennlinien zeigt, daß die Werte für die Restdämpferleistung für den Zug- und Druckbereich unterschiedlich groß sind. Während sich für den Druckbereich eine Restdämpferleistung von ca. 13 % ergibt, beträgt diese im Zugbereich 53 %.

Mit Hilfe einer solchen Auswertung kann möglicherweise aus der Art der Veränderung der Kennlinie auf die Art des Stoßdämpferschadens geschlossen werden.

Aus dem vorstehend Gesagten läßt sich deutlich erkennen, daß das erfindungsgemäße Verfahren zur Stoßdämpferprüfung neue Maßstäbe für die Beurteilung des Zustandes der Fahrzeugkennlinien setzt.

**Patentansprüche**

1. Verfahren zur Bestimmung der Eigenschaften der in einem
   Kraftfahrzeug eingebauten Stoßdämpfer,
   bei dem das Kraftfahrzeug auf eine Auffahrhalterung (1,3) gebracht wird, die anschließend schnell entfernt wird,
   damit das Kraftfahrzeug auf eine Unterlage (5) auffällt, deren Abstand von der Auffahrhalterung (1,3) dem durch die Konstruktion des Kraftfahrzeuges vorgegebenen Restausfederungsweg entspricht,
   so daß der Verlauf der beim Auftreffen auf die Unterlage (5) wirkenden sogenannten Radaufstandskraft bestimmt wird,
   und bei dem das Schwingungsverhalten der Karosserie (9) und jeweils eines Rades (4) gemessen wird,
   **dadurch gekennzeichnet, daß**
   die für das Schwingungsverhalten erhaltenen Meßergebnisse zusammen mit den Meßwerten für die Radaufstandskraft in die für gedämpfte Schwingungen bekannten Differentialgleichungen eingesetzt werden
   und die für das Fahrwerk eines Kraftfahrzeugs charakteristischen Daten, nämlich die Karosserie- und Radmassen, die Federsteifigkeit und die Dämpfungskonstanten berechnet werden.

2. Verfahren nach Anspruch 1, **dadurch gekennzeichnet, daß** das Schwingungsverhalten von Karosserie (9) und Rad (4) der zu prüfenden Achse eines Kraftfahrzeuges mittels einer Wegmessung der entstehenden Hubschwingungen von Karosserie (9) und Rad (4) für jede Seite der geprüften Achse bestimmt wird.

3. Verfahren nach Anspruch 2, **dadurch gekennzeichnet, daß** die Wegmessung entweder durch einzelne Bestimmung der Schwingungsamplituden der Karosserie (9) gegenüber der Unterlage (5) und des Rades (4) gegenüber der Unterlage (5) oder durch Bestimmung der Amplitudendifferenz beider Schwingungen durchgeführt wird.

**4.** Verfahren nach einem der vorhergehenden Ansprüche, **dadurch gekennzeichnet, daß** der Schwingungsverlauf durch eine Geschwindigkeitsmessung der Bewegung von Karosserie (9) und Rad (4) erfolgt.

**5.** Verfahren nach einem der vorhergehenden Ansprüche, **dadurch gekennzeichnet, daß** der Schwingungsverlauf durch eine Beschleunigungsmessung bei der Bewegung von Karosserie (9) und Rad (4) nach ihrem Auftreffen auf die Unterlage (5) erfolgt.

**Claims**

**1.** A method of determining the characteristics of the dampers fitted in a motor vehicle,
in which the motor vehicle is put on to a drive-on holder (1, 3) which is then quickly removed,
so that the vehicle drops on to a support (5), the spacing of which from the drive-on holder (1, 3) corresponds to the residual rebound travel which is predetermined by the design structure of the motor vehicle,
so that the variation in the so-called wheel contact force acting on the support (5) is determined,
and in which the oscillation characteristics of the body (9) and a respective wheel (4) are measured,
**characterised in that**
the measurement results obtained for the oscillation characteristics together with the measurement values for the wheel contact force are inserted into the differential equations which are known for damped oscillations, and
the data which are characteristic for the chassis of a motor vehicle, namely the body and wheel masses, the spring stiffness and the damping constants are calculated.

**2.** A method according to claim 1 **characterised in that** the oscillation characteristics of the body (9) and the wheel (4) of the motor vehicle axle to be tested are determined by means of travel measurement of the corresponding stroke oscillations of the body (9) and the wheel (4) for each side of the axle being tested.

**3.** A method according to claim 2 **characterised in that** travel measurement is effected either by individually determining the oscillation amplitudes of the body (9) with respect to the support (5) and the wheel (4) with respect to the support or by determining the amplitude difference of the two oscillations.

**4.** A method according to one of the preceding claims **characterised in that** the oscillation variation is effected by speed measurement in respect of the movement of the body (9) and the wheel (4).

**5.** A method according to one of the preceding claims **characterised in that** the oscillation variation is effected by acceleration measurement upon movement of the body (9) and the wheel (4) after impact thereof against the support (5).

**Revendications**

**1.** Procédé de détermination des caractéristiques des amortisseurs montés sur un véhicule automobile
dans lequel on met le véhicule automobile sur une pièce (1, 3) de maintien à laquelle il accède et que l'on éloigne ensuite rapidement,
afin que le véhicule automobile tombe sur un support (5) dont la distance à la pièce (1, 3) de maintien à laquelle il accède correspond au débattement résiduel prévu par la construction du véhicule automobile,
de manière à déterminer le comportement de ce que l'on appelle la force d'appui de la roue agissant lors du choc sur le support (5),
et dans lequel on mesure le comportement aux oscillations de la carrosserie (9) et respectivement d'une roue (4),
**caractérisé en ce que**
on introduit les résultats de mesure obtenus pour le comportement aux oscillations ensemble avec les valeurs de mesure de la force d'appui de la roue dans les équations différentielles connues pour les oscillations amorties,
et on calcule les données caractéristiques pour le châssis d'un véhicule automobile, à savoir les dimensions de la carrosserie et de la roue, la raideur élastique et les constantes d'amortissement.

**2.** Procédé suivant la revendication 1, **caractérisé en ce que** l'on détermine le comportement aux oscillations de la carrosserie (9) et de la roue (4) de l'essieu à contrôler d'un véhicule automobile au moyen d'une mesure de trajet des oscillations de soulèvement créées de la carrosserie (9) et de la roue (4) pour chaque côté de l'essieu contrôlé.

3. Procédé suivant la revendication 2, **caractérisé en ce que** l'on effectue les mesures de trajet soit en déterminant les amplitudes d'oscillation de la carrosserie (9) par rapport au support (5) et de la roue (4) par rapport au support (5), soit en déterminant la différence d'amplitude des deux oscillations.

4. Procédé suivant l'une des revendications précédentes, **caractérisé en ce qu'**on effectue le tracé des oscillations par une mesure de vitesse du mouvement de la carrosserie (9) et de la roue (4).

5. Procédé suivant l'une des revendications précédentes, **caractérisé en ce que** l'on effectue le tracé des oscillations par une mesure de l'accélération lors du mouvement de la carrosserie (9) et de la roue (4) après qu'elles ont heurté le support (5).

Fig.1

Fig.2

Fig. 3

KRAFT

N

1,25Hz

9,8Hz

F   Hz

EP 0 756 701 B1

Fig. 4

Fig.5

Fig.6

Fig. 7a

Fig. 7b

Fig. 7c